# EUROPÄISCHE PATENTSCHRIFT

(11) **EP 3 363 653 B1**
(45) Veröffentlichungstag und Bekanntmachung des Hinweises auf die Patenterteilung: **18.05.2022**
(21) Anmeldenummer: 17156299.4
(22) Anmeldetag: 15.02.2017
(51) Int. Cl.: B60B 3/00, B60B 3/08, B60B 5/02, B60B 1/06

(54) **LAUFRAD IN LEICHTBAUWEISE FÜR EINE LANDWIRTSCHAFTLICHE MASCHINE UND LANDWIRTSCHAFTLICHE MASCHINE**
IMPELLER IN LIGHTWEIGHT DESIGN FOR AN AGRICULTURAL MACHINE AND AGRICULTURAL MACHINE
ROUE DE CONSTRUCTION LÉGÈRE POUR UNE MACHINE AGRICOLE ET MACHINE AGRICOLE

(43) Veröffentlichungstag der Anmeldung: 22.08.2018
(73) Patentinhaber: Kverneland Group Soest GmbH, 59494 Soest (DE)
(72) Erfinder: Ekert, Michael, 59427 Unna-Hemmerde (DE)
(74) Vertreter: Bittner, Thomas L.

(56) Entgegenhaltungen:
- EP-A1- 2 298 575
- DE-A1- 19 916 444
- US-A1- 2015 223 384
- US-A1- 2016 128 266
- US-A1- 2016 129 729

## Beschreibung

Die Erfindung betrifft ein Laufrad in Leichtbauweise für eine landwirtschaftliche Maschine sowie eine landwirtschaftliche Maschine.

### Hintergrund

Laufräder, also Räder, die im Betrieb der landwirtschaftlichen Maschine wenigstens zeitweise mit dem Boden in Kontakt treten, finden bei verschiedenen landwirtschaftlichen Maschinen in unterschiedlicher Ausbildung Anwendung. Hierzu gehören beispielsweise Stütz- oder Führungsräder, zum Beispiel an Sämaschinen.

Ein Laufrad für eine landwirtschaftliche Maschine ist im Dokument EP 2 145 775 B1 offenbart. Weitere Laufräder für eine landwirtschaftliche Maschine sind in den folgenden Dokumenten beschrieben: US 2010 / 0107946 A1, US 2015 / 0223388 A1 und US 2015 / 0223389 A1.

Aus dem Dokument US 2016 / 0128266 A1 ist ein Laufrad für eine landwirtschaftliche Maschine bekannt. Bei dem Laufrad wird ein Rad von zwei Radhälften gebildet, die eine Scheibenform aufweisen und als Stanzteile aus einer Metallplatte hergestellt sind. Die Radhälften sind im Wesentlichen identisch ausgebildet und stellen nach dem Zusammenbau eine Radnabe und eine Radfelge zur Aufnahme einer Bereifung bereit. Zwischen Radnabe und Radfelge erstreckt sich eine geschlossene Scheibe.

Im Dokument DE 199 16 444 A1 ist ein Rad, insbesondere für ein Zweirad, vorzugsweise für ein Motorrad, mit einer Nabe, einer Felge und sich zwischen der Nabe und der Felge erstreckenden Speichen oder einer Scheibe offenbart, wobei das Rad vertikal geteilt ist und jedes der beiden Radteile im Wesentlichen hälftig die Nabe, die Speichen beziehungsweise die Scheibe und die Felgen als integrale Bestandteile umfasst. Bei der Gestaltung mit Speichen soll eine Verbindung der Radteile ausschließlich im Bereich der Nabe und der Felge ausgebildet werden, nicht jedoch im Bereich der Speichen.

Im Dokument US 2015 / 0223384 A1 ist ein Radkörper offenbart, der aus Radhälften hergestellt ist. Zwischen Radnabe und Radfelge erstrecken sich Speichen.

### Zusammenfassung

Aufgabe der Erfindung ist es, ein Laufrad in Leichtbauweise für eine landwirtschaftliche Maschine sowie eine landwirtschaftliche Maschine anzugeben, wobei das Laufrad vereinfacht herstellbar ist und verbesserte Betriebseigenschaften aufweisen soll.

Zur Lösung der Aufgabe ist ein Laufrad in Leichtbauweise für eine landwirtschaftliche Maschine nach dem unabhängigen Anspruch 1 geschaffen. Weiterhin ist eine landwirtschaftliche Maschine mit einem Laufrad nach Anspruch 15 geschaffen. Alternative Ausgestaltungen sind Gegenstand von abhängigen Unteransprüchen.

Nach einem Aspekt ist ein Laufrad in Leichtbauweise für eine landwirtschaftliche Maschine geschaffen, wobei das Laufrad ein Rad und eine Bereifung aufweist, die auf dem Rad angeordnet ist. Das Rad ist von einer Radhälfte und einer Radgegenhälfte gebildet, die gleich ausgeführt sind und bei denen jeweils Speichenhälften eine Nabenhälfte mit einer Feigenhälfte verbinden. Die Radhälfte und die Radgegenhälfte sind in Leichtbauweise ausgeführt, derart, dass eine innere Hohlraumstruktur zumindest in den Speichenhälften und der Felgenhälfte ausgebildet ist. Die Radhälfte und die Radgegenhälfte sind zum Ausbilden einer Radnabe und einer Radfelge sowie hierzwischen angeordneten Radspeichen in einer Verbindungsebene miteinander
verbunden, derart, dass innere Flachseiten von Radhälfte und Radgegenhälfte einander gegenüberliegend angeordnet sind. Die Bereifung ist innenseitig entlang der Radfelge zwischen der Radhälfte und der Radgegenhälfte geklemmt.

Nach einem weiteren Aspekt ist eine landwirtschaftliche Maschine mit einem solchen Laufrad in Leichtbauweise geschaffen, wobei die Maschine aus der folgenden Gruppe ausgewählt ist: Sämaschine, Düngerstreuer, Pflug, Mähmaschine und Spritzmaschine.

Bei dem Rad kann eine gerade oder ungerade Anzahl von Radspeichen vorgesehen sein, beispielsweise kann das Rad fünf Speichen aufweisen, die in gleichen Abständen um die Radnabe herum zwischen Radnabe und Radfelge in radialer Richtung verlaufen.

Aufgrund der gleichen Ausbildung sind Radhälfte und Radgegenhälfte identisch ausgeführt. Dieses ermöglicht es, Radhälfte und Radgegenhälfte in ein und demselben Werkzeug herzustellen, beispielsweise mittels Spritzgießen in einem Spritzgusswerkzeug.

Die Radhälfte und die Radgegenhälfte sind bei dem zusammengebauten Rad symmetrisch in Bezug auf eine Verbindungsfläche zwischen den gegenüberliegenden inneren Flachseiten.

In der Radnabe kann ein Lager angeordnet sein, welches mittels eines Lagerhalters gesichert ist. Das Lager kann zum Beispiel ein Kugellager, ein Gleitlager, ein Wälzlager oder eine Lagerbuchse aufweisen. Der Lagerhalter kann einen oder mehrere Vorsprünge an der Außenseite der Radhälften aufweisen. Ergänzend kann ein Halteelement vorgesehen sein, welches in der Radnabe angeordnet ist und einer Positionierung des Lagers dienen kann, insbesondere in axialer Richtung.

Auf einer gegenüberliegenden Seite kann ein offenes Lager durch ein Schutzblech geschützt sein, zum Beispiel gegen Staub. Das Lager kann in axialer Richtung außermittig angeordnet sein. Alternativ kann eine mittige Lagerung vorgesehen sein.

Insbesondere bei mittiger Platzierung des Lagers können zwei Lagerhalter, zum Beispiel Sicherungsscheiben, vorgesehen sein, beispielweise in Form einer symmetrischen Anordnung, jeweils rechts und links, wobei dann ein Staubschutzblech auf der offenen Seite entfallen kann. Die Sicherungsscheibe(n) können alternativ oder ergänzend zu dem einen oder den mehreren Vorsprüngen vorgesehen sein.

Die innere Hohlraumstruktur kann zur inneren Flachseite hin eine offene Hohlraumstruktur sein. Die innere Hohlraumstruktur kann zur inneren Flachseite hin vollständig oder zum Teil als offene Hohlraumstruktur gebildet sein, insbesondere derart, dass Hohlräume der inneren Hohlraumstruktur offen sind mit Blick auf die innere Flachseite.

Die innere Hohlraumstruktur kann zur Außenseite des Rads hin eine geschlossene Hohlraumstruktur sein. Die innere Hohlraumstruktur kann zur Außenseite des Rads hin mit einer vollständig geschlossenen Oberfläche gebildet sein. Die Oberfläche kann glatt sein.

Die innere Hohlraumstruktur im Bereich der Speichenhälften und die innere Hohlraumstruktur im Bereich der Felgenhälfte können verschieden sein. Die inneren Hohlraumstrukturen im Bereich der Speichenhälften einerseits und im Bereich der Felgenhälften andererseits können sich hinsichtlich eines oder mehrerer der folgenden Strukturelemente unterscheiden: Querschnittsform der Hohlräume, Wanddicke der Hohlraumstrukturen, zum Beispiel der Trennwände, und Größe der Hohlraumstrukturen. Bei dieser oder anderen Ausführungsformen können in die Hohlraumstrukturen Durchbrüche eingebettet sein, die der Aufnahme von Verbindungselementen zum Verbinden der Radhälfte und der Radgegenhälfte dienen, beispielsweise Schrauben. Solche Durchbrüche können zum Beispiel im Bereich der Felgenhälfte und / oder in einem Bereich vorgesehen sein, in welchem die Speichenhälften an die Nabenhälfte herangeführt sind. Um die Nabenhälfte herum können Durchbrüche in Bereichen zwischen benachbarten Speichenhälften ausgebildet sein.

Im Bereich der Speichenhälften kann die innere Hohlraumstruktur eine Wabenstruktur aufweisen. Die Waben können längs der Speichenhälften in radialer Richtung zentriert übereinander angeordnet sein. Bei einer Ausführungsform kann in radialer Richtung eine Anordnung übereinander gestapelter vollständiger Waben angeordnet sein, die beidseitig zu äußeren Begrenzungswänden der Speichenhälfte hin durch eine Anordnung nicht vollständiger Waben begrenzt ist. Die Wabenstruktur kann die Speichenhälften über ihre gesamte Länge zwischen der Nabenhälfte und der Felgenhälfte erfassen.

Im Bereich der Felgenhälften kann die innere Hohlraumstruktur Hohlräume mit radial ausgerichteten Trennwänden aufweisen. Bei der inneren Hohlraumstruktur im Bereich der Felgenhälften können Trennwände zwischen benachbarten Hohlräumen in radialer Richtung ausgerichtet sein. Eine solche oder eine andere innere Hohlraumstruktur kann die Felgenhälfte vollständig erfassend ausgeführt sein. Die Felgenhälfte kann mit einem äußeren Ring von Hohlraumstrukturen und einem inneren Ring von Hohlraumstrukturen ausgebildet sein. Der innere und wahlweise der äußere Ring von Hohlraumstrukturen können sich zwischen benachbarten Speichen erstrecken. Durchbrüche für Befestigungsmittel können im inneren und / oder äußeren Ring der Felgenhälfte ausgebildet sein, insbesondere in einem Bereich zwischen benachbarten Speichen. Trennwände der Hohlraumstruktur im inneren Ring und Trennwände der Hohlraumstruktur im äußeren Ring können zueinander versetzt angeordnet sein, zum Beispiel in radialer Richtung verlaufende Trennwände.

Die innere Hohlraumstruktur kann in einem die Nabenhälfte umgebenden Bereich ausgebildet sein. In dem die Nabenhälfte umgebenden Bereich der inneren Hohlraumstruktur können eine oder mehrere Durchbrüche für Befestigungsmittel ausgebildet sein.

Die Bereifung kann entlang der Radfelge in einem umlaufenden innenliegenden Spalt zwischen der Radhälfte und der Radgegenhälfte geklemmt sein. Im Bereich des umlaufenden innenliegenden Spalts liegen Wandabschnitte der Radhälfte und der Radgegenhälfte einander gegenüber und klemmen einen Abschnitt der Bereifung. Der geklemmte Abschnitt der Bereifung kann in Bezug auf den Spalt mit einem Hinterschnitt ausgebildet sein. Der innenliegende Spalt kann in Bezug auf eine mittlere Ebene zwischen der Radhälfte und der Radgegenhälfte mittig oder außermittig angeordnet sein.

Radflächen zwischen den Radspeichen sowie zwischen der Radnabe und der Radfelge können zumindest teilweise mit Schutzelementen ausgefüllt sein, die die Radflächen bedecken. Die Schutzelemente können formschlüssig in den Zwischenräumen (Radflächen) zwischen benachbarten Radspeichen angeordnet sein. Es kann eine lösbare Befestigung der Schutzelemente vorgesehen sein, beispielsweise mittels Anclipsen oder Anschrauben. Die Schutzelemente können als geschlossene Schutzelemente oder Schutzelemente mit Durchbrüchen oder Ausnehmungen ausgebildet sein. Die Schutzelemente können aus dem gleichen Material wie die Radhälften gefertigt sein. Im Fall von Schaufeln können diese zum Beispiel aus Metall sein.

Die Schutzelemente können eine oder mehrere Abdeckplatten und / oder ein oder mehrere Schaufeln aufweisen. Die Abdeckplatten können eine im Wesentlichen dreieckige Form aufweisen. Die Schaufeln können auf einem Basisrahmen oder einer Abdeckplatte angeordnet sein.

Die Radhälfte und die Radgegenhälfte können aus wenigstens einem der folgenden Werkstoffe hergestellt sein: Kunststoff, faserverstärkter Kunststoff und Metall. Die Radhälfte und die Radgegenhälfte können als Spritzgussbauteil ausgebildet sein.

Die Radhälfte und die Radgegenhälfte können einstückig ausgebildet sein.

Die Radhälfte und die Radgegenhälfte können lösbar miteinander verbunden sein. Die lösbare Verbindung kann zum Beispiel mittels Schraubverbindungen ausgebildet sein.

### Beschreibung von Ausführunasbeispielen

Im Folgenden werden weitere Ausführungsbeispiele unter Bezugnahme auf Figuren einer Zeichnung erläutert. Hierbei zeigen:
- Fig. 1: eine perspektivische Darstellung eines Laufrads für eine landwirtschaftliche Maschine mit Rad und hierauf angeordneter Bereifung;
- Fig. 2: eine Querschnittsdarstellung des Laufrads aus Fig. 1;
- Fig. 3: eine perspektivische Darstellung einer Radhälfte von der Außenseite;
- Fig. 4: eine perspektivische Darstellung der Radhälfte aus Fig. 3 von der Innenseite;
- Fig. 5: die Radhälfte aus Fig. 4 von der Innenseite in Draufsicht und
- Fig. 6: eine Querschnittsdarstellung der Radhälfte aus Fig. 3.

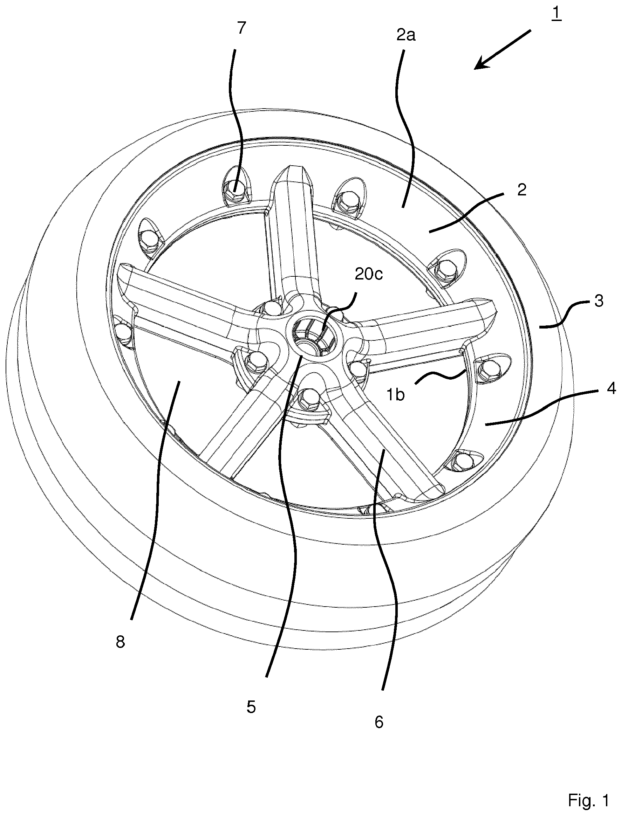

Fig. 1 zeigt eine perspektivische Darstellung eines Laufrads 1 für eine landwirtschaftliche Maschine, welches beim Betrieb der landwirtschaftlichen Maschine wenigstens zeitweise in Kontakt mit dem Boden kommt, über den die landwirtschaftliche Maschine sich bewegt. Bei der landwirtschaftlichen Maschine kann es sich beispielsweise um eine Sämaschine, einen Düngerstreuer, einen Pflug, eine Spritzmaschine oder eine Mähmaschine handeln. Das Laufrad 1 weist ein Rad 2 sowie eine Bereifung 3 auf, die bei der gezeigten Ausführung als Vollmaterialbereifung ausgeführt, beispielsweise aus Vollgummimaterial. Die Bereifung 3 ist auf einer umlaufenden Radfelge 4 angeordnet. Zwischen der Radfelge 4 und einer Radnabe 5 erstrecken sich Radspeichen 6. Die Radspeichen 6 sind um die Radnabe 5 umlaufend in gleichen Abständen und sich in radialer Richtung von der Radnabe 5 zur Radfelge 4 hin erstreckend ausgebildet. Im Bereich der Radfelge 4 und zwischen den Radspeichen 6 benachbart zur Radnabe 5 sind Befestigungsmittel 7 vorgesehen, die beim gezeigten Ausführungsbeispiel als Schrauben ausgeführt sind. Die Befestigungsmittel 7 dienen zum Verbinden von einer Radhälfte 2a und einer Radgegenhälfte 2b, die gleich ausgebildet sind und zusammen das Rad 2 bilden.

Zwischenräume 8, die auch als Radflächen bezeichnet werden können, zwischen benachbarten Radspeichen 6 sind bei dem gezeigten Ausführungsbeispiel offen, können alternativ mit Schutzelementen (nicht dargestellt) zumindest teilweise be- oder verdeckt sein, beispielsweise Abdeckplatten und / oder Schaufeln. Die Schutzelemente können lösbar in den Zwischenräumen 8 angeordnet sein und diese ganz oder teilweise ausfüllen, beispielsweise dadurch, dass die Schutzelemente formschlüssig hierin aufgenommen sind.

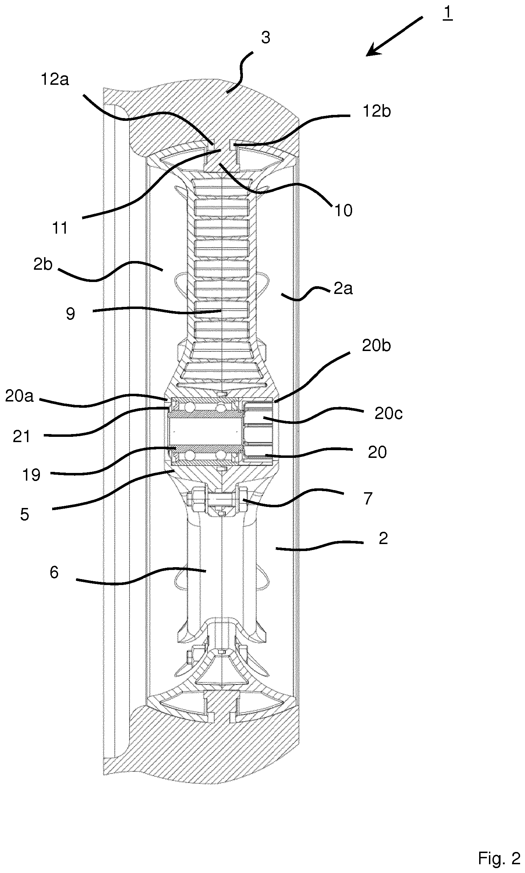

Fig. 2 zeigt eine Querschnittsdarstellung des Laufrads aus Fig. 1. Es ergibt sich, dass die Bereifung 3 in Bezug auf eine Verbindungsebene 9, in welcher innere Flachseiten der Radhälfte und der Radgegenhälfte 2a, 2b einander gegenüberliegen, asymmetrisch ausgebildet ist. Alternativ kann eine symmetrische Ausbildung der Bereifung vorgesehen sein. Eine innenliegende Befestigungslippe 10 der Bereifung 3 ist zwischen der Radhälfte und der Radgegenhälfte 2a, 2b im Bereich eines Spalts 11 geklemmt, wobei ein Hinterschnitt ausgebildet ist. Im Bereich des Spalts 11 liegen sich Wandabschnitte 12a, 12b der Radhälfte und der Radgegenhälfte 2a, 2b einander gegenüber.

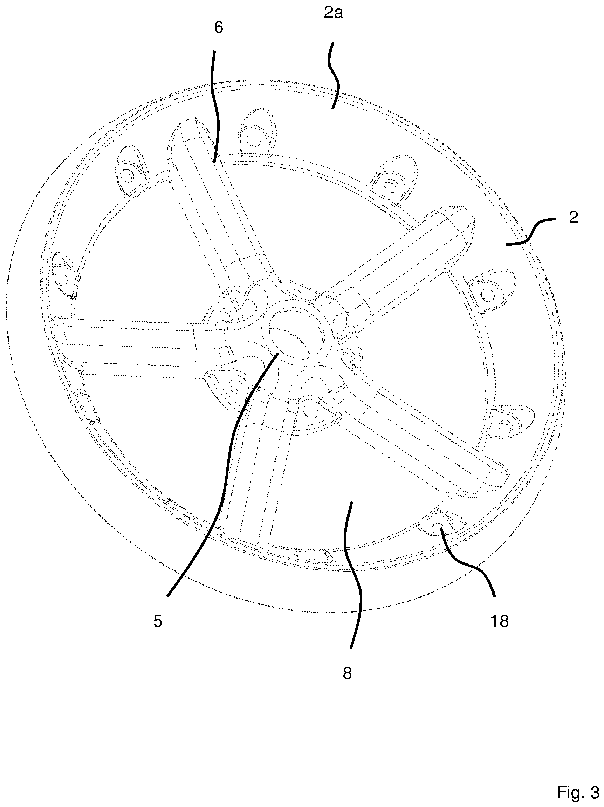

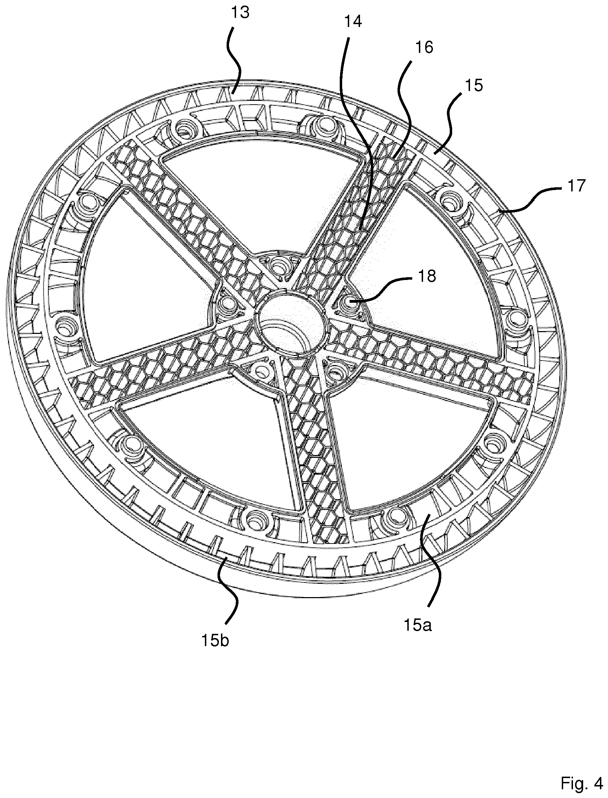

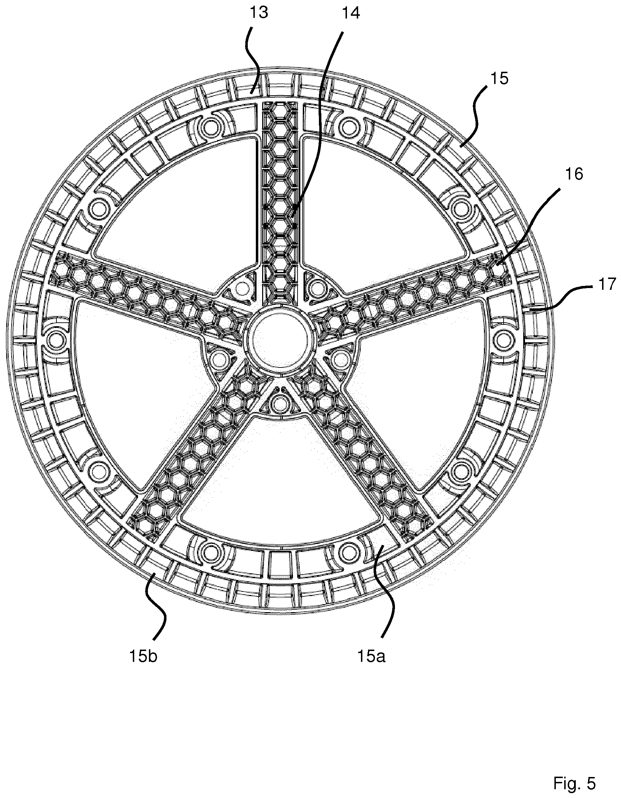

Zum Ausbilden einer Leichtbauweise weisen die Radhälfte und die Radgegenhälfte 2a, 2b sowohl im Bereich der Radfelge 4 wie auch im Bereich der Speichen 6 eine innere Hohlraumstruktur 13 auf, was sich im Detail insbesondere aus den Fig. 4 und 5 ergibt, die die Radhälfte 2a von der Innenseite zeigt. Fig. 3 zeigt die Radhälfte 2a von der Außenseite. Da die Radhälfte 2a und die Radgegenhälfte 2b gleich ausgeführt sind, zeigen die Fig. 3 bis 5 auch eine Darstellung der Radgegenhälfte 2b.

Die innere Hohlraumstruktur 13 ist im Bereich von Speichenhälften 14 und Felgenhälften 15 unterschiedlich ausgebildet. In den Speichenhälften 14 weist die innere Hohlraumstruktur 13 eine Wabenstruktur 16 auf. Im Bereich der Felgenhälfte 15 ist die innere Hohlraumstruktur 13 mit sich in radialer Richtung erstreckenden Trennwänden 17 gebildet. Die Felgenhälfte 15 ist mit einem inneren Ring 15a und einem äußeren Ring 15b gebildet, wobei der äußere Ring 15b umlaufend durchgehend und der innere Ring 15a durch die Speichenhälften 14 unterbrochen sind.

Zur Aufnahme der Befestigungsmittel 7 sind Durchbrüche 18 vorgesehen.

Gemäß den Fig. 3 bis 5 ist die innere Hohlraumstruktur 13 auf der Außenseite (vgl. Fig. 3) als eine geschlossene Hohlraumstruktur und auf der Innenseite (vgl. Fig. 4 und 5) als eine offene Hohlraumstruktur ausgebildet.

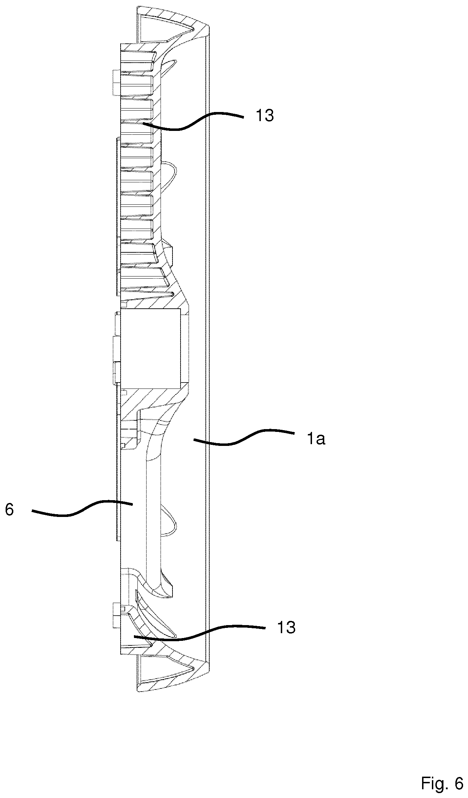

Fig. 6 zeigt eine Querschnittsdarstellung der Radhälfte 1a aus Fig. 3.

Gemäß Fig. 2 ist in der Radnabe 5 ein Lager 19 aufgenommen, das beim gezeigten Ausführungsbeispiel mit einem Kugellager ausgeführt ist. Die Befestigungsmittel 7 halten das Lager 19 zusammen und klemmen die Bereifung 3. Das Lager 19 ist außermittig angeordnet und mithilfe eines Lagerhalters 20 gesichert. Das Lager 19 ist mittels eines (Staub)Schutzblechs 21 geschützt, beispielweise in Form einer Ringscheibe, und wird mittels Vorsprüngen 20a, 20b und eines Haltelements 20c an den Radhälften 2a, 2b positioniert und gesichert. Das Halteelement 20c, welches eine Topfform mit Durchbruch aufweisen kann, dient insbesondere dem axialen Positionieren des Lagers 19 und kann in einer alternativen Ausgestaltung weggelassen sein, zum Beispiel bei einer mittigen Anordnung des Lagers 19 in der Radnabe 5.

## Patentansprüche

1. Laufrad (1) in Leichtbauweise für eine landwirtschaftliche Maschine, mit einem Rad (2) und einer Bereifung (3), die auf dem Rad (2) angeordnet ist, wobei
- das Rad (2) von einer Radhälfte (2a) und einer Radgegenhälfte (2b) gebildet ist, die gleich ausgeführt sind;
- die Radhälfte (2a) und die Radgegenhälfte (2b) in Leichtbauweise ausgeführt sind, derart, dass eine innere Hohlraumstruktur (13) zumindest in einer Felgenhälfte (15) ausgebildet ist;
- die Radhälfte (2a) und die Radgegenhälfte (2b) zum Ausbilden einer Radnabe (5) und einer Radfelge (4) miteinander verbunden sind, derart, dass innere Flachseiten von Radhälfte (2a) und Radgegenhälfte (2b) in einer Verbindungsebene (9) einander gegenüberliegend angeordnet sind; und
- die Bereifung (3) innenseitig entlang der Radfelge (4) zwischen der Radhälfte (2a) und der Radgegenhälfte (2b) geklemmt ist;
**dadurch gekennzeichnet, dass** bei der Radhälfte (2a) und der Radgegenhälfte (2b) jeweils Speichenhälften (14) eine Nabenhälfte mit der Felgenhälfte (15) verbinden und
dass die Radhälfte (2a) und die Radgegenhälfte (2b) zum Ausbilden von Radspeichen (6) zwischen der Radnabe (5) und der Radfelge (4) miteinander verbunden sind, derart, dass die inneren Flachseiten von Radhälfte (2a) und Radgegenhälfte (2b) in der Verbindungsebene (9) einander gegenüberliegend angeordnet sind.

2. Laufrad (1) nach Anspruch 1, **dadurch gekennzeichnet, dass** innere Hohlraumstruktur (13) zur inneren Flachseite hin eine offene Hohlraumstruktur ist.

3. Laufrad (1) nach Anspruch 1 oder 2, **dadurch gekennzeichnet, dass** innere Hohlraumstruktur (13) zur Außenseite des Rads (2) hin eine geschlossene Hohlraumstruktur ist.

4. Laufrad (1) nach mindestens einem der vorangehenden Ansprüche, **dadurch gekennzeichnet, dass** die innere Hohlraumstruktur (13) im Bereich der Speichenhälften (14) und die innere Hohlraumstruktur (13) im Bereich der Felgenhälfte (15) verschieden sind.

5. Laufrad (1) nach mindestens einem der vorangehenden Ansprüche, **dadurch gekennzeichnet, dass** zumindest im Bereich der Speichenhälften (14) die innere Hohlraumstruktur (13) eine Wabenstruktur (16) aufweist.

6. Laufrad (1) nach mindestens einem der vorangehenden Ansprüche, **dadurch gekennzeichnet, dass** zumindest im Bereich der Felgenhälften (14) die innere Hohlraumstruktur (13) Hohlräume mit radial ausgerichteten Trennwänden (17) aufweist.

7. Laufrad (1) nach mindestens einem der vorangehenden Ansprüche, **dadurch gekennzeichnet, dass** die innere Hohlraumstruktur (13) in einem die Nabenhälfte umgebenden Bereich ausgebildet ist.

8. Laufrad (1) nach mindestens einem der vorangehenden Ansprüche, **dadurch gekennzeichnet, dass** die Bereifung (3) entlang der Radfelge (4) in einem umlaufenden innenliegenden Spalt (11) zwischen der Radhälfte (2a) und der Radgegenhälfte (2b) geklemmt ist.

9. Laufrad (1) nach mindestens einem der vorangehenden Ansprüche, **dadurch gekennzeichnet, dass** Radflächen (8) zwischen den Radspeichen (6) sowie zwischen der Radnabe (5) und der Radfelge (4) zumindest teilweise mit Schutzelementen ausgefüllt sind, die Radflächen (8) bedecken.

10. Laufrad (1) nach Anspruch 9, **dadurch gekennzeichnet, dass** Schutzelemente eine oder mehrere Abdeckplatten und / oder ein oder mehrere Schaufeln aufweisen.

11. Laufrad (1) nach mindestens einem der vorangehenden Ansprüche, **dadurch gekennzeichnet, dass** die Radhälfte (2a) und die Radgegenhälfte (2b) aus wenigstens einem der folgenden Werkstoffe hergestellt sind: Kunststoff, faserverstärkter Kunststoff und Metall.

12. Laufrad (1) nach mindestens einem der vorangehenden Ansprüche, **dadurch gekennzeichnet, dass** die Radhälfte (2a) und die Radgegenhälfte (2b) einstückig ausgebildet sind.

13. Laufrad (1) nach mindestens einem der vorangehenden Ansprüche, **dadurch gekennzeichnet, dass** die Radhälfte (2a) und die Radgegenhälfte (2b) lösbar miteinander verbunden sind.

14. Laufrad (1) nach mindestens einem der vorangehenden Ansprüche, **dadurch gekennzeichnet, dass** eine außenseitige Lauffläche der Bereifung (3) in Bezug auf eine Verbindungsfläche (9) zwischen den einander gegenüberliegenden inneren Flachseiten von Radhälfte (2a) und Radgegenhälfte (2b) asymmetrisch ausgebildet ist.

15. Landwirtschaftliche Maschine mit einem Laufrad (1) nach mindestens einem der vorangehenden Ansprüche, ausgewählt aus der folgenden Gruppe: Sämaschine, Düngerstreuer, Pflug, Spritzmaschine und Mähmaschine.

## Claims

1. Lightweight wheel (1) for an agricultural machine, having a wheel (2) and a tyre (3), which is arranged on the wheel (2), wherein
- the wheel (2) is formed by a wheel half (2a) and a wheel counter half (2b), which are designed the same;
- the wheel half (2a) and wheel counter half (2b) are designed to be lightweight such that an inner hollow structure (13) is formed at least in one rim half (15);
- the wheel half (2a) and the wheel counter half (2b) are connected to one another to form a wheel hub (5) and a wheel rim (4) in such a way that inner flat sides of the wheel half (2a) and wheel counter half (2b) are arranged opposite each other in a connecting plane (9); and
- the tyre (3) is clamped on the inside along the wheel rim (4) between the wheel half (2a) and wheel counter half (2b);
**characterized in that** with the wheel half (2a) and wheel counter half (2b), spoke halves (14) respectively connect a hub half to the rim half (15) and **in that** the wheel half (2a) and wheel counter half (2b) are connected to one another to form wheel spokes (6) between the wheel hub (5) and wheel rim (4) in such a way that the inner flat sides of the wheel half (2a) and wheel counter half (2b) are arranged opposite each other in the connecting plane (9).

2. Wheel (1) according to Claim 1, **characterized in that** the inner hollow structure (13) is an open hollow structure towards the inner flat side.

3. Wheel (1) according to Claim 1 or 2, **characterized in that** the inner hollow structure (13) is a closed hollow structure towards the outer side of the wheel (2).

4. Wheel (1) according to at least one of the preceding claims, **characterized in that** the inner hollow structure (13) in the region of the spoke halves (14) and the inner hollow structure (13) in the region of the rim half (15) are different.

5. Wheel (1) according to at least one of the preceding claims, **characterized in that** the inner hollow structure (13) has a honeycomb structure (16) at least in the region of the spoke halves (14).

6. Wheel (1) according to at least one of the preceding claims, **characterized in that** the inner hollow structure (13) has cavities with radially aligned partitions (17) at least in the region of the rim halves (14).

7. Wheel (1) according to at least one of the preceding claims, **characterized in that** the inner hollow structure (13) is formed in a region surrounding the hub half.

8. Wheel (1) according to at least one of the preceding claims, **characterized in that** the tyre (3) is clamped along the wheel rim (4) in a circumferential inner gap (11) between the wheel half (2a) and wheel counter half (2b).

9. Wheel (1) according to at least one of the preceding claims, **characterized in that** wheel surfaces (8) between the wheel spokes (6) as well as between the wheel hub (5) and wheel rim (4) are filled at least partially with protective elements, which cover the wheel surfaces (8).

10. Wheel (1) according to Claim 9, **characterized in that** protective elements have one or more cover plates and/or one or more blades.

11. Wheel (1) according to at least one of the preceding claims, **characterized in that** the wheel half (2a) and wheel counter half (2b) are produced from at least one of the following materials: plastic, fibre-reinforced plastic, and metal.

12. Wheel (1) according to at least one of the following claims, **characterized in that** the wheel half (2a) and wheel counter half (2b) are integrally formed.

13. Wheel (1) according to at least one of the preceding claims, **characterized in that** the wheel half (2a) and wheel counter half (2b) are releasably connected to one another.

14. Wheel (1) according to at least one of the preceding claims, **characterized in that** an outer tread of the tyre (3) is formed asymmetrically in relation to a connecting surface (9) between the opposing inner flat surfaces of the wheel half (2a) and wheel counter half (2b).

15. Agricultural machine having a wheel (1) according to at least one of the preceding claims, selected from the following group: seed drill, fertilizer spreader, plough, spraying machine and mower.

## Revendications

1. Roue de roulement (1) de construction légère pour une machine agricole, avec une roue (2) et un pneu (3) disposé sur la roue (2), dans laquelle
- la roue (2) est formée par une moitié de roue (2a) et une moitié homologue de roue (2b) lesquelles sont réalisées de manière identique ;
- la moitié de roue (2a) et la moitié homologue de roue (2b) sont réalisées avec une construction légère de telle sorte qu'une structure d'espace creux interne (13) est réalisée au moins dans une moitié de jante (15) ;
- la moitié de roue (2a) et la moitié homologue de roue (2b) sont reliées ensemble pour former un moyeu de roue (5) et une jante de roue (4) de telle sorte que des côtés plats internes de la moitié de roue (2a) et moitié homologue de roue (2b) sont disposés de manière située en vis-à-vis l'un de l'autre dans un plan de liaison (9) ; et
- le pneu (3) est serré du côté intérieur le long de la jante de roue (4) entre la moitié de roue (2a) et la moitié homologue de roue (2b) ;
**caractérisée en ce qu'**au niveau de la moitié de roue (2a) et la moitié homologue de roue (2b), des moitiés de rayons (14) relient respectivement une moitié de moyeu à la moitié de jante (15) et que la moitié de roue (2a) et la moitié homologue de roue (2b) sont reliées l'une à l'autre pour la formation de rayons de roue (6) entre le moyeu de roue (5) et la jante de roue (4) de telle sorte que les côtés plats internes de la moitié de roue (2a) et la moitié homologue de roue (2b) sont disposés de manière située en vis-à-vis l'un de l'autre dans le plan de liaison (9).

2. Roue de roulement (1) selon la revendication 1, **caractérisée en ce que** la structure d'espace creux interne (13) est une structure d'espace creux ouverte vers le côté plat interne.

3. Roue de roulement (1) selon la revendication 1 ou 2, **caractérisée en ce que** la structure d'espace creux interne (13) est une structure d'espace creux fermée vers le côté extérieur de la roue (2).

4. Roue de roulement (1) selon l'une au moins des revendications précédentes, **caractérisée en ce que** la structure d'espace creux interne (13) dans la zone des moitiés de rayon (14) et la structure d'espace creux interne (13) dans la zone de la moitié de jante (15) sont différentes.

5. Roue de roulement (1) selon l'une au moins des revendications précédentes, **caractérisée en ce qu'**au moins dans la zone des moitiés de rayons (14), la structure d'espace creux interne (13) présente une structure en nid d'abeille (16).

6. Roue de roulement (1) selon l'une au moins des revendications précédentes, **caractérisée en ce qu'**au moins dans la zone des moitiés de jante (14), la structure d'espace creux interne (13) présente des espaces creux avec des cloisons (17) orientées radialement.

7. Roue de roulement (1) selon l'une au moins des revendications précédentes, **caractérisée en ce que** la structure d'espace creux interne (13) est formée dans une zone entourant la moitié de moyeu.

8. Roue de roulement (1) selon l'une au moins des revendications précédentes, **caractérisée en ce que** le pneu (3) le long de la jante de roue (4) est serré dans une fente périphérique située à l'intérieur (11) entre la moitié de roue (2a) et la moitié homologue de roue (2b).

9. Roue de roulement (1) selon l'une au moins des revendications précédentes, **caractérisée en ce que** des surfaces de roue (8) entre les rayons de roue (6) ainsi qu'entre le moyeu de roue (5) et la jante de roue (4) sont au moins partiellement remplies avec des éléments de protection qui recouvrent les surfaces de roue (8).

10. Roue de roulement (1) selon la revendication 9, **caractérisée en ce que** des éléments de protection présentent une ou plusieurs plaques de couverture et /ou une ou plusieurs ailettes.

11. Roue de roulement (1) selon l'une au moins des revendications précédentes, **caractérisée en ce que** la moitié de roue (2a) et la moitié homologue de roue (2b) sont fabriquées à partir d'au moins l'un des matériaux suivants : de la matière plastique, de la matière plastique renforcée par des fibres, ou du métal.

12. Roue de roulement (1) selon l'une au moins des revendications précédentes, **caractérisée en ce que** la moitié de roue (2a) et la moitié homologue de roue (2b) sont réalisées d'une seule pièce.

13. Roue de roulement (1) selon l'une au moins des revendications précédentes, **caractérisée en ce que** la moitié de roue (2a) et la moitié homologue de roue (2b) sont reliées l'une à l'autre de manière détachable.

14. Roue de roulement (1) selon l'une au moins des revendications précédentes, **caractérisée en ce qu'**une bande de roulement côté extérieur du pneu (3) est réalisée de manière asymétrique par rapport à une surface de liaison (9) entre les côtés plats internes situés en vis-à-vis l'un de l'autre de la moitié de roue (2a) et la moitié homologue de roue (2b).

15. Machine agricole avec une roue de roulement (1) selon l'une au moins des revendications précédentes, sélectionnée dans le groupe suivant : un semoir, un distributeur d'engrais, une charrue, une machine de pulvérisation, et une faucheuse.
